# EUROPEAN PATENT SPECIFICATION

(11) **EP 1 908 799 B1**
(45) Date of publication and mention of the grant of the patent: **14.10.2015**
(21) Application number: 06767182.6
(22) Date of filing: 22.06.2006
(51) Int. Cl.: C08L 63/10, C08K 5/16, C09D 5/02, C09D 7/12, C09D 163/10

(54) **AQUEOUS LIQUID CONTAINING VINYL-MODIFIED EPOXY RESIN, PROCESS FOR PRODUCING THE SAME, AND WATER-BASED COATING MATERIAL**
VINYLMODIFIZIERTES EPOXIDHARZ ENTHALTENDE WÄSSRIGE FLÜSSIGKEIT, HERSTELLUNGSVERFAHREN DAFÜR UND WASSERBASIERTES BESCHICHTUNGSMATERIAL
LIQUIDE AQUEUX CONTENANT UNE RESINE EPOXYDE MODIFIEE PAR UN VINYLE, PROCEDE DE PRODUCTION DE CELUI-CI ET MATIERE D'ENROBAGE A BASE D'EAU

(30) Priority: 30.06.2005 JP 2005192686
(43) Date of publication of application: 09.04.2008
(73) Proprietor: ARAKAWA CHEMICAL INDUSTRIES, LTD., Osaka-shi, Osaka 541-0046 (JP)
(72) Inventor: FUJII, Yuji c/o Arakawa Chemical Industries, Ltd., Osaka-shi, Osaka 5380053 (JP); MAEDA, Yoshinori c/o Arakawa Chemical Ind., Ltd., Izumi-cho, Iwaki-shi Fukushima 9718183 (JP)
(74) Representative: Müller-Boré & Partner Patentanwälte PartG mbB
(86) International application number: PCT/JP2006/312524
(87) International publication number: WO 2007/004436

(56) References cited:
- EP-A2- 0 055 477
- JP-A- 52 114 625
- JP-A- 58 015 514
- JP-A- 59 199 773
- JP-A- 2001 233 932
- JP-A- 2003 026 739
- JP-A- 2005 120 340

## Description

### TECHNICAL FIELD

The invention relates to an aqueous vinyl-modified epoxy resin composition, a method for production thereof and an aqueous coating agent including the aqueous vinyl-modified epoxy resin composition. The aqueous vinyl-modified epoxy resin composition may be an aqueous solution or an aqueous dispersion.

### BACKGROUND ART

While conventional coating films made from water paint have been described as having poor corrosion resistance, vinyl-modified epoxy esters with improved corrosion resistance have been developed, which are obtained by polymerizing a vinyl monomer in the presence of a fatty acid-modified epoxy ester. An epoxy resin is used in such vinyl-modified epoxy esters as a constituting component and thus the vinyl-modified epoxy esters have high corrosion resistance and can be dried at room temperature because of the fatty acid ester component and also can form an aqueous composition depending on selection of the vinyl monomer component.

As the field of application of water paint expands, however, higher performance has been required for the coating films so that there have been a demand for a further improvement in corrosion resistance or water resistance and a demand for high initial coating hardness. For example, conventional vinyl-modified epoxy esters provide low initial coating hardness, and the coating hardness is slowly increased by oxidation polymerization of the fatty acid component in the resins, so that there is a problem in which it takes several days to reach the desired hardness so that scratching can occur at the initial stage of the coating film formation. Conventionally known vinyl-modified epoxy esters also cause a problematic phenomenon in which black coating films prepared from the resins are whitened when soaked in water (hereinafter the phenomenon is referred to as water whitening). Resistance to the water whitening can be improved by increasing the content of the fatty acid component in the vinyl-modified epoxy ester. However, such a case has a problem in which the coating hardness or the corrosion resistance tends to be low.

Thus, the applicant has proposed an aqueous vinyl-modified epoxy resin composition that is obtained by using a bisphenol type epoxy resin and can provide a high initial coating hardness and resistance to water whitening of black coating films (see Patent Literature 1 below). The use of such an aqueous vinyl-modified epoxy resin composition improves the coating hardness but can sometimes make the coating film too hard and sometimes cause cracking of the coating film during long-term use to degrade the corrosion resistance. The resistance to water whitening is also susceptible to improvement. Thus, the applicant has proposed another aqueous vinyl-modified epoxy resin composition that is obtained by neutralizing and dispersing or dissolving a copolymer produced by copolymerizing a specific polymerizable unsaturated group-containing modified epoxy resin with a carboxyl group-containing vinyl monomer or the like (see Patent Literature 2 below). The aqueous vinyl-modified epoxy resin composition obtained by the invention described in Patent Literature 2 provides high initial coating hardness and has good resistance to water whitening but is required to have further improved resistance to acids or brake fluids, for use in automotive component applications.
Patent Literature 1: Japanese Patent Application Laid-Open (JP-A) No. 2003-026739
Patent Literature 2: JP-A No. 2005-120340

### DISCLOSURE OF INVENTION

### PROBLEMS TO BE SOLVED BY THE INVENTION

It is an object of the invention to provide an aqueous vinyl-modified epoxy resin composition that has high resistance to harsher environment, such as resistance to brake fluids, and to provide an aqueous coating agent including such an aqueous vinyl-modified epoxy resin composition.

It is another object of the invention to provide an aqueous vinyl-modified epoxy resin composition that has good resistance to brake fluids and is satisfactory in other properties such as, high initial coating hardness, moderate flexibility, less reduction in corrosion resistance, good resistance to harsher environment, such as resistance to acids, and complete prevention of water whitening, and to provide an aqueous coating agent including such an aqueous vinyl-modified epoxy resin composition.

### MEANS FOR SOLVING THE PROBLEMS

As a result of investigations for solving the above problems, the inventor has found that the above problems can be solved using a water-miscible crosslinking agent and a reaction product produced by polymerizing a specific vinyl monomer in the presence of a polymerizable unsaturated group-containing modified epoxy resin obtained by the reaction of an epoxy resin with a glycidyl group-containing vinyl monomer, particularly by using the water-miscible crosslinking agent and a water-dispersible salt or aqueous solution of the reaction product and that if a mixture of different types of specific epoxy resins is used as the epoxy resin or if another specific vinyl monomer is used together, the resulting coating film can have significantly increased resistance to acids or brake fluids and improved resistance to water whitening, so that the invention has been completed.

The present invention relates to an aqueous vinyl-modified epoxy resin composition, comprising:
an aqueous composition comprising a modified epoxy resin (A) that is neutralized with a basic compound and dispersed or dissolved in water, wherein the modified epoxy resin (A) is obtained by copolymerizing a polymerizable unsaturated group-containing modified epoxy resin (a) and a vinyl monomer (b) comprising at least a carboxyl group-containing vinyl monomer (b-1), wherein the polymerizable unsaturated group-containing modified epoxy resin (a) is obtained by a reaction among (a-1) an epoxy resin comprising at least an aromatic epoxy resin (a-11), (a-2) a glycidyl group-containing vinyl monomer, and (a-3) an amine, and optionally (a-4) a component capable of reacting with the components (a-1) to (a-3); and
a water-miscible crosslinking agent (B),
and the invention relates to a method for producing the aqueous vinyl-modified epoxy resin composition, comprising the steps of:
   neutralizing a modified epoxy resin (A) with a basic compound and dispersing or dissolving the modified epoxy resin (A) in water, wherein the modified epoxy resin (A) is obtained by copolymerizing a polymerizable unsaturated group-containing modified epoxy resin (a) and a vinyl monomer (b) comprising at least a carboxyl group-containing vinyl monomer (b-1), wherein the polymerizable unsaturated group-containing modified epoxy resin (a) is obtained by a reaction among (a-1) an epoxy resin comprising at least an aromatic epoxy resin (a-11), (a-2) a glycidyl group-containing vinyl monomer, and (a-3) an amine, and optionally (a-4) a component capable of reacting with the components (a-1) to (a-3); and
   mixing a water-miscible crosslinking agent (B) with the modified epoxy resin (A),
   and the invention relates to an aqueous coating agent, comprising the aqueous vinyl-modified epoxy resin composition.

### EFFECTS OF THE INVENTION

The aqueous vinyl-modified epoxy resin composition of the invention can form a coating film with high resistance to harsher environment, such as resistance to brake fluids.

When a mixture of different types of specific epoxy resins is used as the epoxy resin or when another specific vinyl monomer is used together, a coating film can be obtained that has good resistance to brake fluids, high initial coating hardness and moderate flexibility and can be free from a reduction in corrosion resistance, have high resistance to acids, be completely prevented from causing water whitening, and also have improved rust-prevention properties.

### BEST MODE FOR CARRYING OUT THE INVENTION

The modified epoxy resin (A) (hereinafter referred to as the component (A)) for use in the invention is obtained by copolymerizing: a polymerizable unsaturated group-containing modified epoxy resin (a) (hereinafter referred to as the component (a)) obtained by a reaction among (a-1) an epoxy resin (hereinafter referred to as the component (a-1)) containing at least (a-11) an aromatic epoxy resin (hereinafter referred to as the component (a-11)), (a-2) a glycidyl group-containing vinyl monomer (hereinafter referred to as the component (a-2)), and (a-3) an amine (hereinafter referred to as the component (a-3)), and optionally (a-4) a component capable of reacting with the components (a-1) to (a-3) (hereinafter referred to as the component (a-4)); and a vinyl monomer (b) (hereinafter referred to as the component (b)) containing at least (b-1) a carboxyl group-containing vinyl monomer (hereinafter referred to as the component (b-1)). In the component (a-1), the component (a-11) is mainly used and preferably used in combination with (a-12) an aliphatic epoxy resin (hereinafter referred to as the component (a-12)). In the component (b), the component (b-1) is preferably copolymerized with (b-2) another vinyl monomer copolymerizable with the component (b-1) (hereinafter referred to as the component (b-2)).

The component (a) is obtained by a reaction among the component (a-1), the component (a-2) and the component (a-3) and optionally the component (a-4). Specifically, the epoxy group derived from the component (a-1), is opened by means of the amino group derived from the component (a-3), and at the same time, the amino group is introduced into the component (a-1), so that the inherent performance of the component (a-1) such as adhesion can be further increased. When the component (a-11) mainly used as the component (a-1) is used in combination with the component (a-12) and when the component (a-12) is incorporated into the molecule, it is expected that moderate flexibility can be imparted to the resulting component (a) to reduce the stress caused on a coating film so that a reduction in adhesion can be prevented and that rust prevention properties can be further improved. In addition, the component (a-2) reacts with the epoxy group in the component (a-1) through the component (a-3) so that a polymerizable unsaturated group is introduced into the component (a-1) to impart copolymerizability.

The component (a-11) for use in the invention may be any of various known epoxy resins that have an aromatic ring in the molecule but do not have any vinyl group. Specifically, the component (a-11) may be a bisphenol type epoxy resin, a novolac type epoxy resin or the like. Any of various known bisphenol type epoxy resins may be used, and examples thereof include reaction products between bisphenols and haloepoxides such as epichlorohydrin and β-methylepichlorohydrin. Examples of the bisphenols include reaction products between phenol or 2,6-dihalophenol and aldehydes or ketones, such as formaldehyde, acetaldehyde, acetone, acetophenone, cyclohexanone, and benzophenone; peroxides of dihydroxyphenyl sulfide; and etherification products of hydroquinone molecules. Examples of the novolac type epoxy resins include novolac type epoxy resins obtained by the reaction between epichlorohydrin and novolac type phenol resins synthesized from phenol, cresol, or the like. One of these epoxy resins may be used alone, or two or more of these epoxy resins may be used in combination as needed. In particular, bisphenol type epoxy resins are preferred in view of adhesion to metals. The epoxy equivalent of the component (a-11) is preferably set at 3,000 or less in view of the molecular weight of the resulting copolymer (A), the workability during manufacture and the like. If the epoxy equivalent is set at 3,000 or less, gelation of the resulting copolymer (A) can be preferably prevented. The epoxy equivalent of the component (a-11) is generally 170 or more.

Any of various known epoxy resins having neither aromatic ring nor vinyl group in the molecule may be used as the component (a-12). Examples of the component (a-12) include glycidyl ethers of polyhydric alcohols and the like. Examples of the polyhydric alcohols include 1,4-butanediol, 1,6-hexanediol, trimethylolpropane, cyclohexanedimethanol, hydrogenated bisphenol, and polyalkylene glycols having an alkylene glycol structure. Examples of polyalkylene glycols include polyethylene glycol, polypropylene glycol, and polybutylene glycol. Besides the glycidyl ethers of polyhydric alcohols, other known epoxy resins such as polybutadiene diglycidyl ether may also be used. Particularly preferred are diglycidyl ethers of alkylene glycol structure-containing diols and polybutadiene diglycidyl ether, because they can increase rust-prevention properties by reducing stress on coating films. Among glycidyl ethers of polyalkylene glycols, glycidyl ethers of polyethylene glycol is preferably used because they can increase water resistance, and glycidyl ethers of polypropylene glycol is preferably used because they can significantly increase rust-prevention properties.

Any of known epoxidized oils and/or any dimer acid glycidyl ester may be used as a part of the component (a-12). In this case, there can be provided a more flexible coating film or a coating film with further improved resistance to water whitening. The epoxidized oil refers to a product produced by epoxidizing natural oil or industrially synthesized oil, and examples thereof include epoxidized soybean oil, epoxidized safflower oil, epoxidized linseed oil, epoxidized safflower oil, and epoxidized cottonseed oil. The dimer acid glycidyl ester may be an epoxy functional group-containing compound that is produced by esterifying the carboxyl group of a known dimer acid with a known diepoxy compound.

Examples of commercially readily available epoxidized oils include Adekacizer O-130P (epoxidized soybean oil) and Adekacizer O-180A (epoxidized linseed oil) each manufactured by Adeka Corporation. Examples of commercially readily available dimer acid glycidyl esters include Epotohto YD-171 and Epotohto YD-172 each manufactured by Tohto Kasei Co., Ltd. and the like.

The epoxy equivalent of the component (a-12) is preferably set at about 3,000 or less in view of the molecular weight of the resulting component (A), the workability during manufacture and the like. If the epoxy equivalent is set at 3,000 or less, gelation of the resulting copolymer (A) can be preferably prevented. The epoxy equivalent of the component (a-12) is generally 87 or more.

Any of various known compounds that contain a glycidyl group and a polymerizable vinyl group in the molecule and do not correspond to the component (a-1) may be used as the component (a-2). Examples of the component (a-2) include glycidyl (meth)acrylate, β-methylglycidyl (meth)acrylate, (meth)allylglycidyl ether, and the like.

Any of various known amines corresponding to neither the component (a-1) nor the component (a-2) may be used as the component (a-3). Examples thereof include alkanolamines, aliphatic amines, aromatic amines, alicyclic amines, and aromatic nucleus-substituted aliphatic amines, and one or more selected from these amines may be used as needed. Examples of alkanolamines include ethanolamine, diethanolamine, diisopropanolamine, di-2-hydroxybutylamine, N-methylethanolamine, N-ethylethanolamine, and N-benzylethanolamine. Examples of aliphatic amines include primary amines such as ethylamine, propylamine, butylamine, hexylamine, laurylamine, stearylamine, palmitylamine, oleylamine, erucylamine; and secondary amines such as diethylamine, dipropylamine, and dibutylamine. Examples of aromatic amines include toluidines, xylidines, cumidines (isopropylanilines), hexylanilines, nonylanilines, and dodecylanilines. Examples of alicyclic amines include cyclopentylamines, cyclohexylamines, and norbornylamines. Examples of aromatic nucleus-substituted aliphatic amines include benzylamine and phenethylamine.

The component (a-4) may be used as an optional component for the component (a). If the component (a) is modified with the component (a-4) (so as to have a higher molecular weight), the dispersibility of the resulting aqueous resin composition can be controlled, or the workability of the resulting coating film can be further improved. Examples of the component (a-4) include monovalent to trivalent organic acids, monovalent to tetravalent alcohols and isocyanate compounds, exclusive of the components (a-1) to (a-3). Examples of monovalent to trivalent organic acids that may be used include various known aliphatic, alicyclic or aromatic carboxylic acids such as dimer acid and trimellitic acid. Examples of monovalent to tetravalent alcohols that may be used include various known aliphatic, alicyclic or aromatic alcohols such as neopentylglycol, trimethylolpropane, and pentaerythritol. Examples of isocyanate compounds that may be used include various known aromatic, aliphatic or alicyclic polyisocyanates such as tolylene diisocyanate, hexamethylene diisocyanate, isophorone diisocyanate, xylylene diisocyanate, and 4,4'-diphenylmethane diisocyanate.

While any of various known methods may be used to produce the component (a), specifically, the conditions described below may be used. The amount of the component (a-12) that may be used is generally, but not limited to, about 40% by weight or less and preferably from 5 to 40% by weight of the total amount of the component (a-11) and the component (a-12). If the amount is from 5 to 40% by weight, moderate flexibility can be imparted to the coating film, and rust-prevention properties can also be improved. In particular, the amount is preferably set at 10 to 35% by weight. When a part of the component (a-12) is replaced with the epoxidized oil and/or the dimer acid glycidyl ester, the amount of the epoxidized oil and/or the dimer acid glycidyl ester used is preferably from about 5 to about 20% by weight of the total amount of the component (a-11) and the component (a-12) (including the epoxidized oil and/or the dimer acid glycidyl ester), so that the coating film can be more flexible and that the water whitening resistance of the coating film can be further increased. In particular, the amount of the epoxidized oil and/or the dimer acid glycidyl ester used is preferably from 10 to 15% by weight of the total amount. If the amount is 20% by weight or less, hardness and corrosion resistance can be preferably increased. If the amount is 5% by weight or more, resistance to water whitening can be preferably further improved. The amount of the component (a-2) used is generally, but not limited to, such that the component (a-2) provides an epoxy equivalent of about 1 to about 25 while the component (a-11) and the component (a-12) provide an epoxy equivalent of 100. If the component (a-2) provides an epoxy equivalent of 1 or more, the storage stability of the resulting aqueous modified epoxy resin composition can be preferably improved. If the component (a-2) provides an epoxy equivalent of 25 or less, the possibility of gelation of the component (a) being produced can be preferably reduced. The amount of the component (a-3) used is preferably such that the amino group of the component (a-3) provides an active hydrogen equivalent of about 90 to about 110 while the components (a-1) and (a-2) provide a total epoxy equivalent of 100. The component (a-4) may be used as needed as long as the effects of the invention are not reduced. When the component (a-4) is used, its amount is preferably from about 5 to about 45 parts by weight, based on 100 parts by weight of the total of the component (a-1).

In general, the component (a) can be easily produced by heating the respective components in the presence of an organic solvent. The reaction temperature is generally from about 60 to about 200°C. If the reaction temperature is too low, the epoxy group can tend to remain unreacted. Therefore, the reaction temperature is preferably 80°C or more. If the reaction temperature is too high, gelation of the reaction product can be easily caused by a ring-opening reaction between the epoxy group in the component (a) and a hydroxyl group in other components or by a ring-opening reaction between epoxy groups. Therefore, the reaction temperature is preferably 150°C or less. While the reaction time depends on the reaction temperature, it is preferably from about 3 to about 10 hours under the temperature conditions described above.

Concerning the organic solvent, while any known organic solvent may be used, hydrophilic solvents are preferably used in terms of forming an aqueous composition of the resulting final vinyl-modified epoxy resin, and examples of such solvents include propylene glycol monomethyl ether, propylene glycol monoethyl ether, propylene glycol mono(n-butyl) ether, propylene glycol mono(tert-butyl) ether, methyl cellosolve, ethyl cellosolve, n-butyl cellosolve, tert-butyl cellosolve, isopropyl alcohol, and butyl alcohol.

The component (A) for use in the invention is produced by copolymerizing the component (a) obtained as described above with the component (b). In the invention, the component (A) corresponds to a vinyl grafted-amine modified epoxy resin. In the invention, it is important to produce a graft product by copolymerizing the polymerizable unsaturated group of the component (a) with the component (b). The introduction of the graft structure allows the resulting component (A) to have good corrosion resistance and high adhesion, which are inherent properties of the component (a-11), and to be stably dispersible or soluble in water.

The component (b) includes the component (b-1) and optionally the component (b-2). Any known vinyl monomer that has a carboxyl group and does not correspond to the component (a) may be used as the component (b-1). Examples of the component (b-1) include carboxyl group-containing vinyl monomers such as acrylic acid, methacrylic acid, maleic acid, maleic anhydride, fumaric acid, and itaconic acid. One or more of these monomers may be used either alone or in combination.

Any known component that is copolymerizable with the component (b-1) and does not correspond to the component (a) or (b-1) may be used as the optional component (b-2). Examples of the component (b-2) include alkyl (meth)acrylate esters such as methyl (meth)acrylate, ethyl (meth)acrylate, n-propyl (meth)acrylate, n-butyl (meth)acrylate, isobutyl (meth)acrylate, tert-butyl (meth)acrylate, and 2-ethylhexyl (meth)acrylate; diacrylate esters; polyalkylene glycol mono(meth)acrylates; polyalkylene glycol di(meth)acrylates; (meth)acrylic silane coupling agents such as 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane; styrene vinyl monomers such as styrene, vinyltoluene, and α-methylstyrene; and other monomers such as vinyl acetate, β-hydroxyethyl acrylate, glycidyl acrylate, glycidyl methacrylate, acrylamide, N,N-diethylmethacrylamide, acrylonitrile, and methacrylonitrile. One or more of these monomers may be used either alone or in combination. In particular, at least one selected from the group consisting of alkyl (meth)acrylates and styrene is preferably used as the component (b-2) in terms of improving film formability or corrosion resistance. In particular, an alkyl (meth)acrylate is preferably used in combination with styrene.

The component (b) is essentially used to facilitate the production of an aqueous composition of the resulting vinyl-modified epoxy resin (to facilitate making it stably dispersible or soluble in water). Thus, the amount of the component (b) to be used should be determined in view of the production of an aqueous composition of the vinyl-modified epoxy resin, and generally preferably controlled such that the component (A) provides a solids acid value of 10 mgKOH/g or more, more preferably of 20 mgKOH/g or more. In order to impart good water resistance or good corrosion resistance to the vinyl-modified epoxy resin, the amount of the component (b) to be used is preferably controlled such that the component (A) provides a solids acid value of 40 mgKOH/g or less, more preferably of 38 mgKOH/g or less. When the optional component (b-2) is used in combination with the component (b-1), the amount of these components to be used may also be determined from these points of view, and is preferably controlled as needed such that the resulting vinyl-modified epoxy resin provides a solids acid value in the above range.

Any polymerization initiator such as any of various known organic peroxides and azo compounds may be used in the copolymerization of the components (a) and (b). Examples thereof include benzoyl peroxide, tert-butyl peroctoate, 2,2-azobisisobutyronitrile, and 2,2-azobis(2,4-dimethylvaleronitrile).

While any polymerization method may be used in the copolymerization, a solution polymerization method is preferably used. For example, the polymerization may be performed at a reaction temperature of about 60 to about 150°C in the presence of the polymerization initiator as described above. The same organic solvent as used in the production of the component (a) may also be used.

The weight ratio ((a) / (b)) of the component (a) to be used to the component (b) to be used may be appropriately determined in view of the solids acid value of the component (A) to be obtained as described above. In general, the ratio ((a) / (b)) is preferably in the range of about 99/1 to about 50/50, more preferably in the range of 97/3 to 70/30, particularly preferably in the range of 90/10 to 80/20, in view of improvement of corrosion resistance. If the amount of the use of the vinyl monomer is less than the lower limit, the water dispersibility or water solubility can be unstable so that the product tends to cause precipitation. If the amount of the use of the vinyl monomer is more than the upper limit, the inherent properties of the vinyl-modified epoxy resin, such as adhesion and corrosion resistance can be easily reduced. When a combination of the components (b-1) and (b-2) is used as the component (b), the weight ratio ((b-2)/[(a)+(b-1)+(b-2)]) among the monomers of the components (a), (b-1) and (b-2) used is preferably from 3/97 to 20/80, so that corrosion resistance, water whitening resistance, acid resistance, and brake fluid resistance can be improved. If the ratio is less than the lower limit, film formability or corrosion resistance can be easily reduced. If the ratio is more than the upper limit, the initial hardness of the coating film (the inherent characteristics of the vinyl-modified epoxy resin) can be easily reduced. When a combination of the components (b-1) and (b-2) is used as the component (b), a mixture of the components (b-1) and (b-2) preferably has a glass transition temperature of about -50 to about 70°C, particularly preferably of -30 to 60°C, so that the hardness of the coating film can be well maintained to improve the corrosion resistance. The glass transition temperature (Tg) may be a theoretical Tg calculated from the Fox-Flory equation.

The component (A) obtained as described above is neutralized with a basic compound and dissolved or dispersed in water to form the desired aqueous composition of vinyl-modified epoxy resin. Specifically, all or a part of the carboxyl groups derived from the component (b-1) in the component (A) are preferably neutralized such that the pH reaches about 7 to about 10. In order to increase the adhesion and corrosion resistance of the coating film, the resulting component (A) preferably has a solid acid value of about 15 to about 40 mgKOH/g. Examples of the basic compound that may be used as a neutralizing agent include ammonia; amines such as triethylamine and dimethylethanolamine; and hydroxides of alkali metals, such as potassium hydroxide and sodium hydroxide. In view of volatility from coating films, ammonia and amines are preferred.

The resin composition of the invention contains: an aqueous composition of the component (A); and a water-miscible crosslinking agent (B) (hereinafter referred to as the component (B)). The addition of the component (B) can improve acid resistance and brake fluid resistance and can further increase resistance to water whitening. Any known water-miscible crosslinking agent may be used as the component (B). Examples thereof include an oxazoline compound, a carbodiimide compound, a melamine compound, and a block isocyanate compound. The water-miscible crosslinking agent refers to a crosslinking agent soluble in water or a crosslinking agent that is dispersible in water, optionally with the aid of an emulsifying agent or the like.

Any known compound having an oxazoline group may be used as the oxazoline compound. Examples thereof include oxazoline group-containing styrene/acrylic resins (trade name: Epocros series, manufactured by Nippon Shokubai Co., Ltd.).

Any known compound having a carbodiimide group may be used as the carbodiimide compound. Examples thereof include N,N'-dicyclohexylcarbodiimide, N,N'-diisopropylcarbodiimide, N,N'-diisopropylphenylcarbodiimide, and N-ethyl-N'-(3-dimethylaminopropyl)carbodiimide hydrochloride (Carbodilite series, manufactured by Nisshinbo Industries, Inc.).

Any known melamine resin may be used as the melamine compound. Examples thereof include methylated melamine resins, methylated urea resins, and benzoguanamine resins (Cymel series and UFR series, Cytec Industries).

Examples of the block isocyanate compound include compounds produced by blocking the free isocyanate group of isocyanate compounds such as tolylene diisocyanate, diphenylmethane diisocyanate, xylylene diisocyanate, naphthalene diisocyanate, isophorone diisocyanate, and hexamethylene diisocyanate, or biuret products thereof, adducts thereof, or isocyanurate products thereof, with a blocking agent such as a phenol blocking agent such as phenol and cresol, an oxime blocking agent such as methyl ethyl ketone oxime and acetone oxime, a lactam blocking agent such as e-caprolactam and γ-butyrolactam, an active methylene blocking agent such as ethyl acetoacetate, acetyl acetone and ethyl malonate, an alcohol blocking agent such as methanol and ethanol, an amine blocking agent, an imine blocking agent, an imide blocking agent, an imidazole blocking agent, and a mercaptan blocking agent.

In particular, the carbodiimide compound is preferably used as the component (B), because if it is used, forced drying can be well performed at room temperature. Concerning the amount of the use of the components (A) and (B), the solid weight ratio of the component (B) to the component (A) is generally from about 1/200 to about 40/60, preferably from 1/99 to 30/70, more preferably from 3/97 to 20/100, so that corrosion resistance, adhesion and the like can be increased.

The aqueous vinyl-modified epoxy resin composition of the invention may be used as an aqueous coating agent (such as a coating including paint, and an adhesive) or the like for a variety of materials such as wood, paper, fibers, plastics, ceramics, iron, and non-ferrous metals, in a variety of applications. When used in various applications, the aqueous composition may be simply diluted with water and then used, or if necessary, may be mixed with an additive such as a pigment, a plasticizer, a solvent, a coloring agent, and an anti-foaming agent, or mixed with any other water-soluble resin or water-dispersible resin.

### EXAMPLES

The invention is more specifically described with the examples and comparative examples below, which are not intended to limit the scope of the invention.

### Example 1

To a reactor equipped with an agitator, a cooler, a thermometer, and a nitrogen gas-introducing tube were added 125 g of butyl cellosolve, 210 g of a bisphenol A type epoxy resin (EpotohtoYD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 22.0 g of octylamine and 14.7 g of dibutylamine were added thereto, and the mixture was allowed to react for 5 hours so that a polymerizable unsaturated group-containing modified epoxy resin was obtained. Subsequently, a mixture of 16 g of acrylic acid, 10.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 2.1 g of triethylamine and 500 g of water were sequentially added thereto and then cooled to 30°C. Thereafter, 115 g of a carbodiimide compound (Carbodilite V-04, Nisshinbo Industries, Inc.) was added thereto so that an aqueous dispersion with a non-volatile content of 35.3%, a viscosity of 1000 mPa·s, a pH of 9.7, and a solids acid value of 30 mgKOH/g was obtained.

### Example 2

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 14.7 g of octylamine, 3.5 g of monoethanolamine and 14.7 g of dibutylamine were added thereto, and the mixture was allowed to react for 5 hours, further 5.0 g of hexamethylene diisocyanate was added thereto, and the mixture was allowed to react for 5 hours so that a polymerizable unsaturated group-containing modified epoxy resin was obtained. Subsequently, a mixture of 16 g of acrylic acid, 10.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 495 g of water were sequentially added thereto and then cooled to 30°C. Thereafter, 58 g of a carbodiimide compound (Carbodilite E-02, Nisshinbo Industries, Inc.) was added thereto so that an aqueous dispersion with a non-volatile content of 35.0%, a viscosity of 1500 mPa·s, a pH of 9.6, and a solids acid value of 32 mgKOH/g was obtained.

### Example 3

To the same reactor described in Example 1 were added 125 g of butyl cellosolve, 188 g of a bisphenol A type epoxy resin (Epotohto YD-017, 1950 in epoxy equivalent, manufactured by Tohto Kasei Co., Ltd.), 97 g of polyethylene glycol diglycidyl ether (Denacol EX-841, Nagase ChemteX Corporation), and 6.0 g of glycidyl methacrylate, and dissolved at 100°C under a stream of nitrogen. Thereafter, 18.6 g of octylamine and 12.4 g of dibutylamine were added thereto, and the mixture was allowed to react for 5 hours so that a polymerizable unsaturated group-containing modified epoxy resin was obtained. Subsequently, a mixture of 16 g of acrylic acid, 10.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 485 g of water were sequentially added thereto and then cooled to 30°C. Thereafter, 40 g of a block isocyanate compound (Takenate WB-700, Mitsui Chemical polyurethane, Inc.) was added thereto so that an aqueous dispersion with a non-volatile content of 35.3%, a viscosity of 1800 mPa·s, a pH of 9.7, and a solids acid value of 32 mgKOH/g was obtained.

### Example 4

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polypropylene glycol diglycidyl ether (Denacol EX-931, Nagase ChemteX Corporation), and 6.5 g of glycidyl methacrylate, and dissolved at 100°C under a stream of nitrogen. Thereafter, 19.8 g of octylamine and 13.2 g of dibutylamine were added thereto, and the mixture was allowed to react for 5 hours so that a polymerizable unsaturated group-containing modified epoxy resin was obtained. Subsequently, a mixture of 16 g of acrylic acid, 10.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 485 g of water were sequentially added thereto and then cooled to 30°C. Thereafter, 88 g of a compound having an oxazoline group (Epocros WS-700, Nippon Shokubai Co., Ltd.) was added thereto so that an aqueous dispersion with a non-volatile content of 34.4%, a viscosity of 2000. mPa·s, a pH of 9.6, and a solids acid value of 32 mgKOH/g was obtained.

### Example 5

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 22.0 g of octylamine and 14.7 g of dibutylamine were added thereto, and the mixture was allowed to react for 5 hours so that a polymerizable unsaturated group-containing modified epoxy resin was obtained. Subsequently, a mixture of 16 g of acrylic acid, 10.0 g of styrene, 30.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 500 g of water were sequentially added thereto and then cooled to 30°C. Thereafter, 115 g of a carbodiimide compound (Carbodilite V-04, Nisshinbo Industries, Inc.) was added thereto so that an aqueous dispersion with a non-volatile content of 36.4%, a viscosity of 900 mPa·s, a pH of 9.5, and a solids acid value of 28 mgKOH/g was obtained

### Example 6

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 14.7 g of octylamine, 3.5 g of monoethanolamine and 14.7 g of dibutylamine were added thereto, and the mixture was allowed to react for 5 hours, further 5.0 g of hexamethylene diisocyanate was added thereto, and the mixture was allowed to react for 5 hours so that a polymerizable unsaturated group-containing modified epoxy resin was obtained. Subsequently, a mixture of 16 g of acrylic acid, 30.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 495 g of water were sequentially added thereto and then cooled to 30°C. Thereafter, 58 g of a carbodiimide compound (Carbodilite E-02, Nisshinbo Industries, Inc.) was added thereto so that an aqueous dispersion with a non-volatile content of 36.2%, a viscosity of 1100 mPa·s, a pH of 9.8, and a solids acid value of 30 mgKOH/g was obtained.

### Example 7

To the same reactor described in Example 1 were added 125 g of butyl cellosolve, 188 g of a bisphenol A type epoxy resin (Epotohto YD-017, 1950 in epoxy equivalent, manufactured by Tohto Kasei Co., Ltd.), 97 g of polyethylene glycol diglycidyl ether (Denacol EX-841, Nagase ChemteX Corporation), and 6.0 g of glycidyl methacrylate, and dissolved at 100°C under a stream of nitrogen. Thereafter, 18.6 g of octylamine and 12.4 g of dibutylamine were added thereto, and the mixture was allowed to react for 5 hours so that a polymerizable unsaturated group-containing modified epoxy resin was obtained. Subsequently, a mixture of 16 g of acrylic acid, 20.0 g of styrene, 20.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 485 g of water were sequentially added thereto and then cooled to 30°C. Thereafter, 40 g of a block isocyanate compound (Takenate WB-700, Mitsui Chemical polyurethane, Inc.) was added thereto so that an aqueous dispersion with a non-volatile content of 36.5%, a viscosity of 1500 mPa·s, a pH of 9.4, and a solids acid value of 30 mgKOH/g was obtained.

### Example 8

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polypropylene glycol diglycidyl ether (Denacol EX-931, Nagase ChemteX Corporation), and 6.5 g of glycidyl methacrylate, and dissolved at 100°C under a stream of nitrogen. Thereafter, 19.8 g of octylamine and 13.2 g of dibutylamine were added thereto, and the mixture was allowed to react for 5 hours so that a polymerizable unsaturated group-containing modified epoxy resin was obtained. Subsequently, a mixture of 16 g of acrylic acid, 10.0 g of styrene, 20.0 g of butyl acrylate, 10.0 g of 2-hydroxyethyl methacrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 530 g of water were sequentially added thereto and then cooled to 30°C. Thereafter, 28 g of a melamine compound (Cymel 303, Cytec Industries) was added thereto so that an aqueous dispersion with a non-volatile content of 36.4%, a viscosity of 800 mPa·s, a pH of 9.9, and a solids acid value of 30 mgKOH/g was obtained.

### Example 9

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 22.0 g of octylamine and 14.7 g of dibutylamine were added thereto, and the mixture was allowed to react for 5 hours so that a polymerizable unsaturated group-containing modified epoxy resin was obtained. Subsequently, a mixture of 10 g of acrylic acid, 10.0 g of styrene, 30.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 13 g of triethylamine and 500 g of water were sequentially added thereto and then cooled to 30°C. Thereafter, 115 g of a carbodiimide compound (Carbodilite V-04, Nisshinbo Industries, Inc.) was added thereto so that an aqueous dispersion with a non-volatile content of 36.2%, a viscosity of 3000 mPa·s, a pH of 9.7, and a solids acid value of 18 mgKOH/g was obtained.

### Example 10

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 14.7 g of octylamine, 3.5 g of monoethanolamine and 14.7 g of dibutylamine were added thereto, and the mixture was allowed to react for 5 hours, further 5.0 g of hexamethylene diisocyanate was added thereto, and the mixture was allowed to react for 5 hours so that a polymerizable unsaturated group-containing modified epoxy resin was obtained. Subsequently, a mixture of 10 g of acrylic acid, 30.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 13 g of triethylamine and 495 g of water were sequentially added thereto and then cooled to 30°C. Thereafter, 58 g of a carbodiimide compound (Carbodilite E-02, Nisshinbo Industries, Inc.) was added thereto so that an aqueous dispersion with a non-volatile content of 36.1%, a viscosity of 2500 mPa·s, a pH of 9.5, and a solids acid value of 19 mgKOH/g was obtained.

### Example 11

To the same reactor described in Example 1 were added 125 g of butyl cellosolve, 188 g of a bisphenol A type epoxy resin (Epotohto YD-017, 1950 in epoxy equivalent, manufactured by Tohto Kasei Co., Ltd.), 97 g of polyethylene glycol diglycidyl ether (Denacol EX-841, Nagase ChemteX Corporation), and 6.0 g of glycidyl methacrylate, and dissolved at 100°C. under a stream of nitrogen. Thereafter, 18.6 g of octylamine and 12.4 g of dibutylamine were added thereto, and the mixture was allowed to react for 5 hours so that a polymerizable unsaturated group-containing modified epoxy resin was obtained. Subsequently, a mixture of 8 g of acrylic acid, 20.0 g of styrene, 20.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 10 g of triethylamine and 485 g of water were sequentially added thereto and then cooled to 30°C. Thereafter, 40 g of a block isocyanate compound (Takenate WB-700, Mitsui Chemical polyurethane, Inc.) was added thereto so that an aqueous dispersion with a non-volatile content of 36.4%, a viscosity of 2800 mPa·s, a pH of 9.9, and a solids acid value of 16 mgKOH/g was obtained.

### Example 12

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polypropylene glycol diglycidyl ether (Denacol EX-931, Nagase ChemteX Corporation), and 6.5 g of glycidyl methacrylate, and dissolved at 100°C under a stream of nitrogen. Thereafter, 19.8 g of octylamine and 13.2 g of dibutylamine were added thereto, and the mixture was allowed to react for 5 hours so that a polymerizable unsaturated group-containing modified epoxy resin was obtained. Subsequently, a mixture of 8 g of acrylic acid, 10.0 g of styrene, 30.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 10 g of triethylamine and 485 g of water were sequentially added thereto and then cooled to 30°C. Thereafter, 88 g of a compound having an oxazoline group (Epocros WS-700, Nippon Shokubai Co., Ltd.) was added thereto so that an aqueous dispersion with a non-volatile content of 35.1%, a viscosity of 3200 mPa·s, a pH of 9.9, and a solids acid value of 15 mgKOH/g was obtained.

### Example 13

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 22.0 g of octylamine and 14.7 g of dibutylamine were added thereto, and the mixture was allowed to react for 5 hours so that a polymerizable unsaturated group-containing modified epoxy resin was obtained. Subsequently, a mixture of 16 g of acrylic acid, 20.0 g of styrene, 40.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 560 g of water were sequentially added thereto and then cooled to 30°C. Thereafter, 115 g of a carbodiimide compound (Carbodilite V-04, Nisshinbo Industries, Inc.) was added thereto so that an aqueous dispersion with a non-volatile content of 35.7%, a viscosity of 500 mPa·s, a pH of 9.7, and a solids acid value of 27 mgKOH/g was obtained

### Example 14

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 14.7 g of octylamine, 3.5 g of monoethanolamine and 14.7 g of dibutylamine were added thereto, and the mixture was allowed to react for 5 hours, further 5.0 g of hexamethylene diisocyanate was added thereto, and the mixture was allowed to react for 5 hours so that a polymerizable unsaturated group-containing modified epoxy resin was obtained. Subsequently, a mixture of 16 g of acrylic acid, 50.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 550 g of water were sequentially added thereto and then cooled to 30°C. Thereafter, 58 g of a carbodiimide compound (Carbodilite E-02, Nisshinbo Industries, Inc.) was added thereto so that an aqueous dispersion with a non-volatile content of 35.6%, a viscosity of 300 mPa·s, a pH of 9.6, and a solids acid value of 29 mgKOH/g was obtained.

### Example 15

To the same reactor described in Example 1 were added 125 g of butyl cellosolve, 188 g of a bisphenol A type epoxy resin (Epotohto YD-017, 1950 in epoxy equivalent, manufactured by Tohto Kasei Co., Ltd.), 97 g of polyethylene glycol diglycidyl ether (Denacol EX-841, Nagase ChemteX Corporation), and 6.0 g of glycidyl methacrylate, and dissolved at 100°C under a stream of nitrogen. Thereafter, 18.6 g of octylamine and 12.4 g of dibutylamine were added thereto, and the mixture was allowed to react for 5 hours so that a polymerizable unsaturated group-containing modified epoxy resin was obtained. Subsequently, a mixture of 16 g of acrylic acid, 25.0 g of styrene, 30.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 560 g of water were sequentially added thereto and then cooled to 30°C. Thereafter, 40 g of a block isocyanate compound (Takenate WB-700, Mitsui Chemical polyurethane, Inc.) was added thereto so that an aqueous dispersion with a non-volatile content of 35.0%, a viscosity of 500 mPa·s, a pH of 9.8, and a solids acid value of 29 mgKOH/g was obtained.

### Example 16

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polypropylene glycol diglycidyl ether (Denacol EX-931, Nagase ChemteX Corporation), and 6.5 g of glycidyl methacrylate, and dissolved at 100°C under a stream of nitrogen. Thereafter, 19.8 g of octylamine and 13.2 g of dibutylamine were added thereto, and the mixture was allowed to react for 5 hours so that a polymerizable unsaturated group-containing modified epoxy resin was obtained. Subsequently, a mixture of 16 g of acrylic acid, 20.0 g of styrene, 30.0 g of butyl acrylate, 10.0 g of 2-hydroxyethyl methacrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 600 g of water were sequentially added thereto and then cooled to 30°C. Thereafter, 28 g of a melamine compound (Cymel 303, Cytec Industries) was added thereto so that an aqueous dispersion with a non-volatile content of 35.3%, a viscosity of 400 mPa·s, a pH of 9.9, and a solids acid value of 28 mgKOH/g was obtained.

### Example 17

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 22.0 g of octylamine and 14.7 g of dibutylamine were added thereto, and the mixture was allowed to react for 5 hours so that a polymerizable unsaturated group-containing modified epoxy resin was obtained. Subsequently, a mixture of 16 g of acrylic acid, 5.0 g of styrene, 4.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 480 g of water were sequentially added thereto and then cooled to 30°C. Thereafter, 115 g of a carbodiimide compound (Carbodilite V-04, Nisshinbo Industries, Inc.) was added thereto so that an aqueous dispersion with a non-volatile content of 35.3%, a viscosity of 1200 mPa·s, a pH of 9.6, and a solids acid value of 30 mgKOH/g was obtained.

### Example 18

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 14.7 g of octylamine, 3.5 g of monoethanolamine and 14.7 g of dibutylamine were added thereto, and the mixture was allowed to react for 5 hours, further 5.0 g of hexamethylene diisocyanate was added thereto, and the mixture was allowed to react for 5 hours so that a polymerizable unsaturated group-containing modified epoxy resin was obtained. Subsequently, a mixture of 16 g of acrylic acid, 5.0 g of styrene, 4.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 470 g of water were sequentially added thereto and then cooled to 30°C. Thereafter, 58 g of a carbodiimide compound (Carbodilite E-02, Nisshinbo Industries, Inc.) was added thereto so that an aqueous dispersion with a non-volatile content of 35.2%, a viscosity of 1300 mPa·s, a pH of 9.6, and a solids acid value of 32 mgKOH/g was obtained.

### Example 19

To the same reactor described in Example 1 were added 125 g of butyl cellosolve, 188 g of a bisphenol A type epoxy resin (Epotohto YD-017, 1950 in epoxy equivalent, manufactured by Tohto Kasei Co., Ltd.), 97 g of polyethylene glycol diglycidyl ether (Denacol EX-841, Nagase ChemteX Corporation), and 6.0 g of glycidyl methacrylate, and dissolved at 100°C under a stream of nitrogen. Thereafter, 18.6 g of octylamine and 12.4 g of dibutylamine were added thereto, and the mixture was allowed to react for 5 hours so that a polymerizable unsaturated group-containing modified epoxy resin was obtained. Subsequently, a mixture of 16 g of acrylic acid, 45.0 g of styrene, 45.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 600 g of water were sequentially added thereto and then cooled to 30°C. Thereafter, 40 g of a block isocyanate compound (Takenate WB-700, Mitsui Chemical polyurethane, Inc.) was added thereto so that an aqueous dispersion with a non-volatile content of 35.7%, a viscosity of 600 mPa·s, a pH of 9.5, and a solids acid value of 27 mgKOH/g was obtained.

### Example 20

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polypropylene glycol diglycidyl ether (Denacol EX-931, Nagase ChemteX Corporation), and 6.5 g of glycidyl methacrylate, and dissolved at 100°C under a stream of nitrogen. Thereafter, 19.8 g of octylamine and 13.2 g of dibutylamine were added thereto, and the mixture was allowed to react for 5 hours so that a polymerizable unsaturated group-containing modified epoxy resin was obtained. Subsequently, a mixture of 16 g of acrylic acid, 65.0 g of styrene, 30.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 600 g of water were sequentially added thereto and then cooled to 30°C. Thereafter, 88 g of a compound having an oxazoline group (Epocros WS-700, Nippon Shokubai Co., Ltd.) was added thereto so that an aqueous dispersion with a non-volatile content of 35.1%, a viscosity of 500 mPa·s, a pH of 9.6, and a solids acid value of 26 mgKOH/g was obtained.

### Example 21

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 22.0 g of octylamine and 14.7 g of dibutylamine were added thereto, and the mixture was allowed to react for 5 hours so that a polymerizable unsaturated group-containing modified epoxy resin was obtained. Subsequently, a mixture of 6.5 g of acrylic acid, 10.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 8.5 g of triethylamine and 490 g of water were sequentially added thereto and then cooled to 30°C. Thereafter, 115 g of a carbodiimide compound (Carbodilite V-04, Nisshinbo Industries, Inc.) was added thereto so that an aqueous dispersion with a non-volatile content of 35.5%, a viscosity of 2500 mPa·s, a pH of 9.4, and a solids acid value of 12 mgKOH/g was obtained.

### Example 22

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 14.7 g of octylamine, 3.5 g of monoethanolamine and 14.7 g of dibutylamine were added thereto, and the mixture was allowed to react for 5 hours, further 5.0 g of hexamethylene diisocyanate was added thereto, and the mixture was allowed to react for 5 hours so that a polymerizable unsaturated group-containing modified epoxy resin was obtained. Subsequently, a mixture of 6.5 g of acrylic acid, 10.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 8.5 g of triethylamine and 470 g of water were sequentially added thereto and then cooled to 30°C. Thereafter, 58 g of a carbodiimide compound (Carbodilite E-02, Nisshinbo Industries, Inc.) was added thereto so that an aqueous dispersion with a non-volatile content of 35.7%, a viscosity of 3000 mPa·s, a pH of 9.6, and a solids acid value of 13 mgKOH/g was obtained.

### Example 23

To the same reactor described in Example 1 were added 125 g of butyl cellosolve, 188 g of a bisphenol A type epoxy resin (Epotohto YD-017, 1950 in epoxy equivalent, manufactured by Tohto Kasei Co., Ltd.), 97 g of polyethylene glycol diglycidyl ether (Denacol EX-841, Nagase ChemteX Corporation), and 6.0 g of glycidyl methacrylate, and dissolved at 100°C under a stream of nitrogen. Thereafter, 18.6 g of octylamine and 12.4 g of dibutylamine were added thereto, and the mixture was allowed to react for 5 hours so that a polymerizable unsaturated group-containing modified epoxy resin was obtained. Subsequently, a mixture of 20 g of acrylic acid, 10.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 26 g of triethylamine and 490 g of water were sequentially added thereto and then cooled to 30°C. Thereafter, 40 g of a block isocyanate compound (Takenate WB-700, Mitsui Chemical polyurethane, Inc.) was added thereto so that an aqueous dispersion with a non-volatile content of 35.2%, a viscosity of 2000 mPa·s, a pH of 9.5, and a solids acid value of 40 mgKOH/g was obtained.

### Example 24

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polypropylene glycol diglycidyl ether (Denacol EX-931, Nagase ChemteX Corporation), and 6.5 g of glycidyl methacrylate, and dissolved at 100°C under a stream of nitrogen. Thereafter, 19.8 g of octylamine and 13.2 g of dibutylamine were added thereto, and the mixture was allowed to react for 5 hours so that a polymerizable unsaturated group-containing modified epoxy resin was obtained. Subsequently, a mixture of 20 g of acrylic acid, 10.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 26 g of triethylamine and 490 g of water were sequentially added thereto and then cooled to 30°C. Thereafter, 88 g of a compound having an oxazoline group (Epocros WS-700, Nippon Shokubai Co., Ltd.) was added thereto so that an aqueous dispersion with a non-volatile content of 34.3%, a viscosity of 2200 mPa·s, a pH of 9.5, and a solids acid value of 39 mgKOH/g was obtained.

### Example 25

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 22.0 g of octylamine and 14.7 g of dibutylamine were added thereto, and the mixture was allowed to react for 5 hours so that a polymerizable unsaturated group-containing modified epoxy resin was obtained. Subsequently, a mixture of 18 g of acrylic acid, 30.0 g of styrene, 35.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 24 g of triethylamine and 580 g of water were sequentially added thereto and then cooled to 30°C. Thereafter, 115 g of a carbodiimide compound (Carbodilite V-04, Nisshinbo Industries, Inc.) was added thereto so that an aqueous dispersion with a non-volatile content of 35.4%, a viscosity of 500 mPa·s, a pH of 9.7, and a solids acid value of 30 mgKOH/g was obtained.

### Example 26

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 14.7 g of octylamine, 3.5 g of monoethanolamine and 14.7 g of dibutylamine were added thereto, and the mixture was allowed to react for 5 hours, further 5.0 g of hexamethylene diisocyanate was added thereto, and the mixture was allowed to react for 5 hours so that a polymerizable unsaturated group-containing modified epoxy resin was obtained. Subsequently, a mixture of 13.0 g of acrylic acid, 50.0 g of styrene, 20.0g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 17 g of triethylamine and 580 g of water were sequentially added thereto and then cooled to 30°C. Thereafter, 58 g of a carbodiimide compound (Carbodilite E-02, Nisshinbo Industries, Inc.) was added thereto so that an aqueous dispersion with a non-volatile content of 35.2%, a viscosity of 900 mPa·s, a pH of 9.8, and a solids acid value of 23 mgKOH/g was obtained.

### Example 27

To the same reactor described in Example 1 were added 125 g of butyl cellosolve, 188 g of a bisphenol A type epoxy resin (Epotohto YD-017, 1950 in epoxy equivalent, manufactured by Tohto Kasei Co., Ltd.), 97 g of polyethylene glycol diglycidyl ether (Denacol EX-841, Nagase ChemteX Corporation), and 6.0 g of glycidyl methacrylate, and dissolved at 100°C under a stream of nitrogen. Thereafter, 18.6 g of octylamine and 12.4 g of dibutylamine were added thereto, and the mixture was allowed to react for 5 hours so that a polymerizable unsaturated group-containing modified epoxy resin was obtained. Subsequently, a mixture of 16 g of acrylic acid, 20.0 g of styrene, 45.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 560 g of water were sequentially added thereto and then cooled to 30°C. Thereafter, 40 g of a block isocyanate compound (Takenate WB-700, Mitsui Chemical polyurethane, Inc.) was added thereto so that an aqueous dispersion with a non-volatile content of 35.5%, a viscosity of 1200 mPa·s, a pH of 9.5, and a solids acid value of 29 mgKOH/g was obtained.

### Example 28

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polypropylene glycol diglycidyl ether (Denacol EX-931, Nagase ChemteX Corporation), and 6.5 g of glycidyl methacrylate, and dissolved at 100°C under a stream of nitrogen. Thereafter, 19.8 g of octylamine and 13.2 g of dibutylamine were added thereto, and the mixture was allowed to react for 5 hours so that a polymerizable unsaturated group-containing modified epoxy resin was obtained. Subsequently, a mixture of 16 g of acrylic acid, 35.0 g of styrene, 20.0 g of butyl acrylate, 10.0 g of 2-hydroxyethyl methacrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 580 g of water were sequentially added thereto and then cooled to 30°C. Thereafter, 28 g of a melamine compound (Cymel 303, Cytec Industries) was added thereto so that an aqueous dispersion with a non-volatile content of 36.2%, a viscosity of 800 mPa·s, a pH of 9.8, and a solids acid value of 28 mgKOH/g was obtained.

### Example 29

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), and 6.5 g of glycidyl methacrylate, and dissolved at 100°C under a stream of nitrogen. Thereafter, 16.6 g of octylamine and 11.0 g of dibutylamine were added thereto, and the mixture was allowed to react for 5 hours so that a polymerizable unsaturated group-containing modified epoxy resin was obtained. Subsequently, a mixture of 16 g of acrylic acid, 10.0 g of styrene, 30.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 560 g of water were sequentially added thereto and then cooled to 30°C. Thereafter, 115 g of a carbodiimide compound (Carbodilite V-04, Nisshinbo Industries, Inc.) was added thereto so that an aqueous dispersion with a non-volatile content of 35.5%, a viscosity of 1000 mPa·s, a pH of 9.7, and a solids acid value of 33 mgKOH/g was obtained.

### Example 30

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 22.0 g of octylamine and 14.7 g of dibutylamine were added thereto, and the mixture was allowed to react for 5 hours so that a polymerizable unsaturated group-containing modified epoxy resin was obtained. Subsequently, a mixture of 18.0 g of methacrylic acid, 10.0 g of methyl methacrylate, 45.0 g of butyl methacrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 620 g of water were sequentially added thereto and then cooled to 30°C. Thereafter, 58 g of a carbodiimide compound (Carbodilite E-02, Nisshinbo Industries, Inc.) was added thereto so that an aqueous dispersion with a non-volatile content of 35.5%, a viscosity of 1500 mPa·s, a pH of 9.6, and a solids acid value of 29 mgKOH/g was obtained.

### Comparative Example 1

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 22.0 g of octylamine and 14.7 g of dibutylamine were added thereto, and the mixture was allowed to react for 5 hours so that a polymerizable unsaturated group-containing modified epoxy resin was obtained. Subsequently, a mixture of 16 g of acrylic acid, 10.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 500 g of water were sequentially added thereto and then cooled to 30°C, and an aqueous dispersion with a non-volatile content of 35.0%, a viscosity of 1200 mPa·s, a pH of 9.7, and a solids acid value of 33 mgKOH/g was obtained.

### Comparative Example 2

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 14.7 g of octylamine, 3.5 g of monoethanolamine and 14.7 g of dibutylamine were added thereto, and the mixture was allowed to react for 5 hours, further 5.0 g of hexamethylene diisocyanate was added thereto, and the mixture was allowed to react for 5 hours so that a polymerizable unsaturated group-containing modified epoxy resin was obtained. Subsequently, a mixture of 16 g of acrylic acid, 10.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 495 g of water were sequentially added, and an aqueous dispersion with a non-volatile content of 35.0%, a viscosity of 2100 mPa·s, a pH of 9.7, and a solids acid value of 33 mgKOH/g was obtained.

### Comparative Example 3

To the same reactor described in Example 1 were added 125 g of butyl cellosolve, 188 g of a bisphenol A type epoxy resin (Epotohto YD-017, 1950 in epoxy equivalent, manufactured by Tohto Kasei Co., Ltd.), 97 g of polyethylene glycol diglycidyl ether (Denacol EX-841, Nagase ChemteX Corporation), and 6.0 g of glycidyl methacrylate, and dissolved at 100°C under a stream of nitrogen. Thereafter, 18.6 g of octylamine and 12.4 g of dibutylamine were added thereto, and the mixture was allowed to react for 5 hours so that a polymerizable unsaturated group-containing modified epoxy resin was obtained. Subsequently, a mixture of 16 g of acrylic acid, 10.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 485 g of water were sequentially added, and an aqueous dispersion with a non-volatile content of 35.0%, a viscosity of 2000 mPa·s, a pH of 9.7, and a solids acid value of 34 mgKOH/g was obtained.

### Comparative Example 4

To the same reactor described in Example 1 were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a stream of nitrogen. Thereafter, 19.8 g of octylamine and 13.2 g of dibutylamine were added thereto, and the mixture was allowed to react for 5 hours so that a polymerizable unsaturated group-containing modified epoxy resin was obtained. Subsequently, a mixture of 16 g of acrylic acid, 10.0 g of styrene, 10.0 g of butyl acrylate, 40 g of butyl cellosolve, and 3 g of tert-butylperoxy-2-ethylhexanoate was added dropwise to the reaction system over 1 hour, and the reaction system was kept in the heating for 4 hours. The reaction system was cooled to 80°C, and then 21 g of triethylamine and 485 g of water were sequentially added, and an aqueous dispersion with a non-volatile content of 35.0%, a viscosity of 800 mPa·s, a pH of 9.7, and a solids acid value of 34 mgKOH/g was obtained.

A water paint with the composition described below was prepared using each of the aqueous vinyl-modified epoxy resin compositions (aqueous dispersions) obtained in the examples and the comparative examples above. The performance of a coating film obtained from the paint was evaluated by the methods described below. The results of the evaluation are shown in Tables 1 to 3. The ratio of each component in each example is shown in Tables 4 and 5.

### (Preparation of Water Paint and Coating Film Plate)

Mixed were 44.6 g of the aqueous vinyl-modified epoxy resin composition, 1.8 g of carbon black, 5.6 g of zinc phosphate, 23.8 g of calcium carbonate, 1.8 g of deionized water, and 80 g of glass beads, and then the mixture was kneaded in a paint shaker for 1 hour and 30 minutes. Thereafter, 23 g of the aqueous vinyl-modified epoxy resin dispersion was mixed therewith, and then the glass beads were removed so that a water paint was obtained. For each of the aqueous vinyl-modified epoxy resin compositions used, the preparation was performed such that the water paint had a pigment weight concentration (PWC) of 57% and a paint concentration of 53.2% (a solvent content of 10.2%). The resulting water paint was applied with a bar coater onto a degreased dull steel plate (SPCC-SD, 0.8x70x150 mm) such that the coating film would have a thickness of 20 µm after drying. When the carbodiimide compound was used as a curing agent, the coating film was subjected to forced dying (at 80°C for 20 minutes) and then allowed to stand at room temperature (23°C, 65%R.H.) for 5 days. When the oxazoline compound or the block isocyanate compound was used as a curing agent, the coating film was baked (at 150°C for 30 minutes) and then allowed to stand at room temperature (23°C, 65%R.H.) for 5 days. When the melamine compound was used as a curing agent, a catalyst (Nacure 5225, at 2% based on the amount of the solids) was added, and the coating film was baked (at 150°C for 30 minutes) and then allowed to stand at room temperature (23°C, 65%R.H.) for 5 days.

### (Evaluation Test of Coating Film)

The hardness of the coating film was evaluated according to JIS K 5600.

The corrosion resistance of the coating film was evaluated according to JIS K 5600 and defined as a cellophane-tape peeling width (mm) after a salt spray test for 10 or 20 days.

The water resistance of the coating film was evaluated according to JIS Z 8736, and the whiteness (the Lab value) of the coating film was measured with a double-beam spectroscopic color-difference meter (SZII-Σ80 TYPE III (trade name), manufactured by Nippon Denshoku Industries Co., Ltd.). The smaller the whiteness (Lab value), the better the water resistance. The evaluation was performed according to the criteria: 27 or more: remarkable whitening of the coating film; 25-26: many whitened portions observed in the coating film; 24 or less: a little or almost no whitening of the coating film.

The acid resistance was examined by visually evaluating the state of the surface of the coating film after 48-hour immersion of the coating film in an aqueous 0.1 mol/L sulfuric acid solution according to the following criteria:
1: Peeling was observed over the entire surface;
2: Partial peeling was observed;
3: Swelling, cracking, softening, or rusting was observed;
4: Gloss change or discoloration was observed; and
5: No abnormal event was observed

### (Brake Fluid Resistance Test)

The brake fluid resistance was examined by visually evaluating the state of the surface of the coating film after 24-hour immersion of the test piece in non-mineral oil (ethylene glycol ether-based) automobile brake fluid (three types, JIS K 2233) according to the following criteria:
1: Entirely dissolved;
2: Swelling;
3: Cracking or softening was observed;
4: Gloss change or discoloration was observed; and
5: No abnormal event was observed.

**Table 1**

| | Coating Film Hardness | | Corrosion Resistance (mm) | | Water Whitening Resistance (Lab) | Acid Resistance | Brake Fluid Resistance |
|---|---|---|---|---|---|---|---|
| | After 1 Hour | After 1 Day | 10 Days | 20 Days | | | |
| Example 1 | HB | H | 6-8 | Tape Width | 16 | 4 | 5 |
| Example 2 | HB | F | 2-3 | 4-6 | 19 | 4 | 4 |
| Example 3 | HB | H | 2-3 | 5-7 | 15 | 4 | 4 |
| Example 4 | HB | F | 2-3 | 5-7 | 18 | 4 | 4 |
| Example 5 | B | HB | 1-2 | 3-5 | 19 | 5 | 5 |
| Example 6 | HB | HB | 0 | 0-1 | 19 | 5 | 5 |
| Example 7 | HB | HB | 0-1 | 1-2 | 15 | 5 | 5 |
| Example 8 | HB | HB | 0-1 | 1-2 | 17 | 5 | 5 |
| Example 9 | B | HB | 6-8 | Tape Width | 19 | 4 | 5 |
| Example 10 | HB | HB | 4-6 | Tape Width | 15 | 4 | 5 |
| Example 11 | HB | HB | 6-8 | Tape Width | 15 | 4 | 5 |
| Example 12 | B | B | 5-7 | Tape Width | 19 | 4 | 5 |
| Example 13 | 3B | 2B | 2-3 | 6-8 | 15 | 5 | 5 |
| Example 14 | 4B | 2B | 2-3 | 4-6 | 18 | 4 | 5 |

**Table 2**

| | Coating Film Hardness | | Corrosion Resistance (mm) | | Water Whitening Resistance (Lab) | Acid Resistance | Brake Fluid Resistance |
|---|---|---|---|---|---|---|---|
| | After 1 Hour | After 1 Day | 10 Days | 20 Days | | | |
| Example 15 | 4B | 3B | 2-3 | 6-8 | 15 | 5 | 4 |
| Example 16 | 5B | 2B | 2-3 | 5-7 | 15 | 4 | 4 |
| Example 17 | HB | F | 5-7 | Tape Width | 19 | 5 | 3 |
| Example 18 | HB | H | 6-9 | Tape Width | 21 | 5 | 3 |
| Example 19 | <6B | 4B | 2-3 | 4-6 | 21 | 3 | 4 |
| Example 20 | 6B | 3B | 2-3 | 6-8 | 20 | 3 | 4 |
| Example 21 | HB | HB | Tape Width | - | 24 | 3 | 3 |
| Example 22 | HB | HB | Tape Width | - | 23 | 3 | 3 |
| Example 23 | HB | HB | 6-8 | Entire Rusting | 29 | 1 | 3 |
| Example 24 | HB | HB | 5-7 | Entire Rusting | 30 | 1 | 3 |
| Example 25 | 5B | 3B | 2-3 | 6-8 | 19 | 3 | 4 |
| Example 26 | 6B | 4B | 2-3 | 4-6 | 19 | 4 | 4 |
| Example 27 | <6B | 4B | 2-3 | 6-8 | 17 | 3 | 4 |
| Example 28 | 5B | 3B | 2-3 | 5-7 | 18 | 4 | 4 |
| Example 29 | HB | F | 2-3 | 5-6 | 18 | 4 | 5 |
| Example 30 | HB | F | 2-3 | 4-5 | 19 | 5 | 5 |

**Table 3**

| | Coating Film Hardness | | Corrosion Resistance (mm) | | Water Whitening Resistance (Lab) | Acid Resistance | Brake Fluid Resistance |
|---|---|---|---|---|---|---|---|
| | After 1 Hour | After 1 Dav | 10 Days | 20 Days | | | |
| Comparative Example 1 | HB | HB | 0-1 | 1-2 | 23 | 1 | 1 |
| Comparative Example 2 | HB | HB | 0-1 | 1-2 | 23 | 1 | 1 |
| Comparative Example 3 | HB | F | 0-1 | 1-2 | 23 | 1 | 1 |
| Comparative Example 4 | HB | HB | 0 | 0-1 | 24 | 1 | 1 |

* In Tables 1 to 3, "Tape Width" indicates that the tape-attached portion entirely peeled off.
* In Table 2, <6B represents 6B or less.
* In Table 2, "Entire Rusting" indicates a state where the entire surface rusted so that the tape peeling test was impossible.

**Table 4**

| | (a-11)/(a-12) | Acid Value of Resin | (a)/(b) | Tg: (b-1)+(b-2) | (B)/(A) |
|---|---|---|---|---|---|
| Example 1 | 74/26 | 34 | 89/11 | 40 | 11/89 |
| Example 2 | 74/26 | 34 | 89/11 | 40 | 6/94 |
| Example 3 | 66/34 | 34 | 89/11 | 40 | 5/95 |
| Example 4 | 74/26 | 34 | 89/11 | 40 | 6/94 |
| Example 5 | 74/26 | 32 | 85/15 | -3 | 11/89 |
| Example 6 | 74/26 | 32 | 84/16 | 59 | 6/94 |
| Example 7 | 66/34 | 33 | 84/16 | 25 | 5/95 |
| Example 8 | 74/26 | 32 | 84/16 | 19 | 7/93 |
| Example 9 | 74/26 | 20 | 86/14 | -12 | 11/89 |
| Example 10 | 74/26 | 20 | 86/14 | 54 | 6/94 |
| Example 11 | 66/34 | 16 | 86/14 | 15 | 5/95 |
| Example 12 | 74/26 | 15 | 86/14 | -15 | 6/94 |
| Example 13 | 74/26 | 30 | 80/20 | -2 | 10/90 |
| Example 14 | 74/26 | 31 | 80/20 | 69 | 5/95 |
| Example 15 | 66/34 | 31 | 81/19 | 14 | 4/96 |
| Example 16 | 74/26 | 31 | 80/20 | 14 | 6/94 |
| Example 17 | 74/26 | 35 | 92/8 | 65 | 11/89 |
| Example 18 | 74/26 | 35 | 92/8 | 65 | 6/94 |
| Example 19 | 66/34 | 29 | 75/25 | 13 | 4/96 |
| Example 20 | 74/26 | 28 | 74/26 | 40 | 5/95 |
| Example 21 | 74/26 | 14 | 91/9 | 21 | 11/89 |
| Example 22 | 74/26 | 14 | 91/9 | 21 | 6/94 |

**Table 5**

| | (a-11)/(a-12) | Acid Value of Resin | (a)/(b) | Tg: (b-1)+(b-2) | (B)/(A) |
|---|---|---|---|---|---|
| Example 23 | 66/34 | 43 | 88/12 | 45 | 5/95 |
| Example 24 | 74/26 | 42 | 88/12 | 45 | 6/94 |
| Example 25 | 74/26 | 34 | 79/21 | 14 | 10/90 |
| Example 26 | 74/26 | 25 | 79/21 | 46 | 6/94 |
| Example 27 | 66/34 | 31 | 79/21 | -6 | 4/96 |
| Example 28 | 74/26 | 30 | 79/21 | 40 | 6/94 |
| Example 29 | 100/0 | 33 | 85/15 | -3 | 11/89 |
| Example 30 | 74/26 | 29 | 82/18 | 60 | 5/95 |
| Comparative Example 1 | 74/26 | 30 | 89/11 | 40 | 0/100 |
| Comparative Example 2 | 74/26 | 34 | 89/11 | 40 | 0/100 |
| Comparative Example 3 | 66/34 | 34 | 89/11 | 40 | 0/100 |
| Comparative Example 4 | 74/26 | 34 | 89/11 | 40 | 0/100 |

In Tables 4 and 5, (a-11)/(a-12) represents the weight ratio of the component (a-11) to the component (a-12), Acid Value of Resin represents the acid value of the polymerizable unsaturated group-containing modified epoxy resin (the theoretical acid value (mgKOH/g) of the resin solid), (a)/(b) represents the weight ratio of the component (a) to the component (b), Tg represents the theoretical Tg (°C) of the copolymer of the component (b-1) and the component (b-2) calculated from the Fox-Flory equation, and B/A represents the solid weight ratio of the component (B) to the component (A).

### INDUSTRIAL APPLICABILITY

The aqueous vinyl-modified epoxy resin composition of the invention may be used as an aqueous coating agent (such as a coating including paint, and an adhesive) or the like for a variety of materials such as wood, paper, fibers, plastics, ceramics, iron, and non-ferrous metals, in a variety of applications.

## Claims

1. An aqueous vinyl-modified epoxy resin composition, comprising:
an aqueous composition comprising a modified epoxy resin (A) that is neutralized with a basic compound and dispersed or dissolved in water, wherein the modified epoxy resin (A) is obtained by copolymerizing a polymerizable unsaturated group-containing modified epoxy resin (a) and a vinyl monomer (b) comprising at least a carboxyl group-containing vinyl monomer (b-1), wherein the polymerizable unsaturated group-containing modified epoxy resin (a) is obtained by a reaction among (a-1) an epoxy resin comprising at least an aromatic epoxy resin (a -11), (a-2) a glycidyl group-containing vinyl monomer, and (a-3) an amine, and optionally (a-4) a component capable of reacting with the components (a-1) to (a-3); and
a water-miscible crosslinking agent (B).

2. The aqueous vinyl-modified epoxy resin composition according to claim 1, wherein the vinyl monomer (b) comprises the carboxyl group-containing vinyl monomer (b-1) and another vinyl monomer (b-2) copolymerizable with the component (b-1).

3. The aqueous vinyl-modified epoxy resin composition according to claim 1 or 2, wherein (a-1) the epoxy resin comprises (a-11) the aromatic epoxy resin and (a-12) an aliphatic epoxy resin.

4. The aqueous vinyl-modified epoxy resin composition according to claim 3, wherein the weight ratio of (a-11) the aromatic epoxy resin used to the aliphatic epoxy resin (a-12) used is from 100/0 to 40/60.

5. The aqueous vinyl-modified epoxy resin composition according to any one of claims 1 to 4, wherein the weight ratio ((a)/(b)) of the polymerizable unsaturated group-containing modified epoxy resin (a) used to form the modified epoxy resin (A) to the vinyl monomer (b) used to form the modified epoxy resin (A) is in the range of 99/1 to 50/50.

6. The aqueous vinyl-modified epoxy resin composition according to any one of claims 1 to 5, wherein the modified epoxy resin (A) has a solids acid value of 10 to 40 mgKOH/g.

7. The aqueous vinyl-modified epoxy resin composition according to any one of claims 1 to 6, wherein (a-12) the aliphatic epoxy resin is an epoxidized oil, a dimer acid glycidyl ester, a diglycidyl ether of a diol having an alkylene glycol structure, or a polybutadiene diglycidyl ether.

8. The aqueous vinyl-modified epoxy resin composition according to any one of claims 2 to 7, wherein the vinyl monomer (b-2) copolymerizable with the component (b-1) is at least one selected from the group consisting of a (meth)acrylate ester and a styrene vinyl monomer, and the weight ratio ((b-2)/[(a)+(b-1)+(b-2)]) between the monomers of the components (a), (b-1) and (b-2) used is from 3/97 to 20/80.

9. The aqueous vinyl-modified epoxy resin composition according to any one of claims 1 to 8, wherein the water-miscible crosslinking agent (B) is at least one selected from the group consisting of an oxazoline compound, a carbodiimide compound, a melamine compound, and a block isocyanate compound.

10. The aqueous vinyl-modified epoxy resin composition according to any one of claims 2 to 9, wherein a mixture of the component (b-1) and the component (b-2) has a glass transition temperature of -50°C to 70°C.

11. The aqueous vinyl-modified epoxy resin composition according to any one of claims 1 to 9, wherein the amount of the water-miscible crosslinking agent (B) used to the amount of the modified epoxy resin (A) used (the solid weight ratio) is from 1/200 to 40/60.

12. A method for producing the aqueous vinyl-modified epoxy resin composition according to any one of claims 1 to 11, comprising the steps of:
neutralizing a modified epoxy resin (A) with a basic compound and dispersing or dissolving the modified epoxy resin (A) in water, wherein the modified epoxy resin (A) is obtained by copolymerizing a polymerizable unsaturated group-containing modified epoxy resin (a) and a vinyl monomer (b) comprising at least a carboxyl group-containing vinyl monomer (b-1), wherein the polymerizable unsaturated group-containing modified epoxy resin (a) is obtained by a reaction among (a-1) an epoxy resin comprising at least an aromatic epoxy resin (a-11), (a-2) a glycidyl group-containing vinyl monomer, and (a-3) an amine, and optionally (a-4) a component capable of reacting with the components (a-1) to (a-3); and
mixing a water-miscible crosslinking agent (B) with the modified epoxy resin (A).

13. An aqueous coating agent, comprising the aqueous vinyl-modified epoxy resin composition according to any one of claims 1 to 11.

## Patentansprüche

1. Wässrige vinylmodifizierte Epoxidharzzusammensetzung, umfassend:
eine wässrige Zusammensetzung, umfassend ein modifiziertes Epoxidharz (A), das mit einer basischen Verbindung neutralisiert und in Wasser dispergiert oder gelöst ist, wobei das modifizierte Epoxidharz (A) durch das Copolymerisieren eines polymerisierbare ungesättigte Gruppen-enthaltenden modifizierten Epoxidharzes (a) und eines Vinylmonomers (b), umfassend mindestens ein Carboxylgruppen-enthaltendes Vinylmonomer (b-1), erhalten wird, wobei das polymerisierbare ungesättigte Gruppen-enthaltende modifizierte Epoxidharz (a) durch eine Umsetzung zwischen (a-1) einem Epoxidharz, umfassend mindestens ein aromatisches Epoxidharz (a-11), (a-2) einem Glycidylgruppenenthaltenden Vinylmonomer und (a-3) einem Amin, und gegebenenfalls (a-4) einer Komponente, die geeignet ist, mit den Komponenten (a-1) bis (a-3) zu reagieren, erhalten wird; und
ein wassermischbares Vernetzungsmittel (B).

2. Wässrige vinylmodifizierte Epoxidharzzusammensetzung nach Anspruch 1, wobei das Vinylmonomer (b) das Carboxylgruppen-enthaltende Vinylmonomer (b-1) und ein anderes Vinylmonomer (b-2) umfasst, das mit der Komponente (b-1) copolymerisierbar ist.

3. Wässrige vinylmodifizierte Epoxidharzzusammensetzung nach Anspruch 1 oder 2, wobei das Epoxidharz (a-1) das aromatische Epoxidharz (a-11) und (a-12) ein aliphatisches Epoxidharz umfasst.

4. Wässrige vinylmodifizierte Epoxidharzzusammensetzung nach Anspruch 3, wobei das Gewichtsverhältnis des verwendeten aromatischen Epoxidharzes (a-11) zu dem verwendeten aliphatischen Epoxidharz (a-12) von 100/0 bis 40/60 beträgt.

5. Wässrige vinylmodifizierte Epoxidharzzusammensetzung nach einem der Ansprüche 1 bis 4, wobei das Gewichtsverhältnis ((a)/(b)) des polymerisierbare ungesättigte Gruppen-enthaltenden modifizierten Epoxidharzes (a), das verwendet wird, um das modifizierte Epoxidharz (A) zu bilden, zu dem Vinylmonomer (b), das verwendet wird, um das modifizierte Epoxidharz (A) zu bilden, in dem Bereich von 99/1 bis 50/50 liegt.

6. Wässrige vinylmodifizierte Epoxidharzzusammensetzung nach einem der Ansprüche 1 bis 5, wobei das modifizierte Epoxidharz (A) einen Feststoffsäurewert von 10 bis 40 mgKOH/g aufweist.

7. Wässrige vinylmodifizierte Epoxidharzzusammensetzung nach einem der Ansprüche 1 bis 6, wobei das aliphatische Epoxidharz (a-12) ein epoxidiertes Öl, ein Dimersäureglycidylester, ein Diglycidylether eines Diols mit einer Alkylenglycolstruktur oder ein Polybutadiendiglycidylether ist.

8. Wässrige vinylmodifizierte Epoxidharzzusammensetzung nach einem der Ansprüche 2 bis 7, wobei das mit der Komponente (b-1) copolymerisierbare Vinylmonomer (b-2) mindestens eines ist, ausgewählt aus der Gruppe, bestehend aus einem (Meth)acrylatester und einem Styrolvinylmonomer, und das Gewichtsverhältnis ((b-2)/[(a)+(b-1)+(b-2)]) zwischen den Monomeren der verwendeten Komponenten (a), (b-1) und (b-2) von 3/97 bis 20/80 beträgt.

9. Wässrige vinylmodifizierte Epoxidharzzusammensetzung nach einem der Ansprüche 1 bis 8, wobei das wassermischbare Vernetzungsmittel (B) mindestens eines ist, ausgewählt aus der Gruppe, bestehend aus einer Oxazolinverbindung, einer Carbodiimidverbindung, einer Melaminverbindung und einer Blockisocyanatverbindung.

10. Wässrige vinylmodifizierte Epoxidharzzusammensetzung nach einem der Ansprüche 2 bis 9, wobei ein Gemisch aus der Komponente (b-1) und der Komponente (b-2) eine Glasübergangstemperatur von -50°C bis 70°C aufweist.

11. Wässrige vinylmodifizierte Epoxidharzzusammensetzung nach einem der Ansprüche 1 bis 9, wobei die Menge des verwendeten wassermischbaren Vernetzungsmittels (B) zu der Menge des verwendeten modifizierten Epoxidharzes (A) (das Feststoffgewichtsverhältnis) von 1/200 bis 40/60 beträgt.

12. Verfahren zur Herstellung der wässrigen vinylmodifizierten Epoxidharzzusammensetzung nach einem der Ansprüche 1 bis 11, umfassend die Schritte des:
Neutralisierens eines modifizierten Epoxidharzes (A) mit einer basischen Verbindung und Dispergierens oder Lösens des modifizierten Epoxidharzes (A) in Wasser, wobei das modifizierte Epoxidharz (A) durch das Copolymerisieren eines polymerisierbare ungesättigte Gruppen-enthaltenden modifizierten Epoxidharzes (a) und eines Vinylmonomers (b), umfassend mindestens ein Carboxylgruppen-enthaltendes Vinylmonomer (b-1), erhalten wird, wobei das polymerisierbare ungesättigte Gruppen-enthaltende modifizierte Epoxidharz (a) durch eine Umsetzung zwischen (a-1) einem Epoxidharz, umfassend mindestens ein aromatisches Epoxidharz (a-11), (a-2) einem Glycidylgruppenenthaltenden Vinylmonomer und (a-3) einem Amin, und gegebenenfalls (a-4) einer Komponente, die geeignet ist, mit den Komponenten (a-1) bis (a-3) zu reagieren, erhalten wird; und
Mischens eines wassermischbaren Vernetzungsmittels (B) mit dem modifizierten Epoxidharz (A).

13. Wässriges Beschichtungsmittel, umfassend die wässrige vinylmodifizierte Epoxidharzzusammensetzung nach einem der Ansprüche 1 bis 11.

## Revendications

1. Composition aqueuse contenant une résine époxyde modifiée par un vinyle, comprenant :
une composition aqueuse comprenant une résine époxyde modifiée (A) qui est neutralisée par un composé basique et dispersée ou dissoute dans l'eau, dans laquelle la résine époxyde modifiée (A) est obtenue en copolymérisant une résine époxyde modifiée contenant un groupe insaturé polymérisable (a) et un monomère vinylique (b) comprenant au moins un monomère vinylique contenant un groupe carboxyle (b-1), dans laquelle la résine époxyde modifiée contenant un groupe insaturé polymérisable (a) est obtenue par une réaction entre (a-1) une résine époxyde comprenant au moins une résine époxyde aromatique (a-11), (a-2) un monomère vinylique contenant un groupe glycidyle, et (a-3) une amine, et facultativement (a-4) un composant capable de réagir avec les composants (a-1) à (a-3) ; et
un agent de réticulation miscible à l'eau (B).

2. Composition aqueuse contenant une résine époxyde modifiée par un vinyle selon la revendication 1, dans laquelle le monomère vinylique (b) comprend le monomère vinylique contenant un groupe carboxyle (b-1) et un autre monomère vinylique (b-2) copolymérisable avec le composant (b-1).

3. Composition aqueuse contenant une résine époxyde modifiée par un vinyle selon la revendication 1 ou 2, dans laquelle (a-1) la résine époxyde comprend (a-11) la résine époxyde aromatique et (a-12) une résine époxyde aliphatique.

4. Composition aqueuse contenant une résine époxyde modifiée par un vinyle selon la revendication 3, dans laquelle le rapport pondéral de (a-11) la résine époxyde aromatique utilisée à la résine époxyde aliphatique (a-12) utilisée est de 100/0 à 40/60.

5. Composition aqueuse contenant une résine époxyde modifiée par un vinyle selon l'une quelconque des revendications 1 à 4, dans laquelle le rapport pondéral ((a)/(b)) de la résine époxyde modifiée contenant un groupe insaturé polymérisable (a) utilisée pour former la résine époxyde modifiée (A) au monomère vinylique (b) utilisé pour former la résine époxyde modifiée (A) se situe dans la plage de 99/1 à 50/50.

6. Composition aqueuse contenant une résine époxyde modifiée par un vinyle selon l'une quelconque des revendications 1 à 5, dans laquelle la résine époxyde modifiée (A) a un indice d'acidité des matières solides de 10 à 40 mgKOH/g.

7. Composition aqueuse contenant une résine époxyde modifiée par un vinyle selon l'une quelconque des revendications .1 à 6, dans laquelle (a-12) la résine époxyde aliphatique est une huile époxydée, un ester glycidylique d'acide dimère, un éther diglycidylique d'un diol possédant une structure d'alkylène glycol, ou un éther diglycidylique de polybutadiène.

8. Composition aqueuse contenant une résine époxyde modifiée par un vinyle selon l'une quelconque des revendications 2 à 7, dans laquelle le monomère vinylique (b-2) copolymérisable avec le composant (b-1) est au moins un monomère choisi dans le groupe constitué d'un ester de (méth)acrylate et d'un monomère vinylique de styrène, et le rapport pondéral ((b-2)/[(a)+(b-1)+(b-2)]) entre les monomères des composants (a), (b-1) et (b-2) utilisés est de 3/97 à 20/80.

9. Composition aqueuse contenant une résine époxyde modifiée par un vinyle selon l'une quelconque des revendications 1 à 8, dans laquelle l'agent de réticulation miscible à l'eau (B) est au moins un agent choisi dans le groupe constitué d'un composé oxazoline, d'un composé carbodiimide, d'un composé mélamine et d'un composé isocyanate séquencé.

10. Composition aqueuse contenant une résine époxyde modifiée par un vinyle selon l'une quelconque des revendications 2 à 9, dans laquelle un mélange du composant (b-1) et du composant (b-2) possède une température de transition vitreuse de -50 °C à 70 °C.

11. Composition aqueuse contenant une résine époxyde modifiée par un vinyle selon l'une quelconque des revendications 1 à 9, dans laquelle la quantité de l'agent de réticulation miscible à l'eau (B) utilisé à la quantité de la résine époxyde modifiée (A) utilisée (le rapport pondéral des matières solides) est de 1/200 à 40/60.

12. Procédé de production de la composition aqueuse contenant une résine époxyde modifiée par un vinyle selon l'une quelconque des revendications 1 à 11, comprenant les étapes consistant à :
neutraliser une résine époxyde modifiée (A) avec un composé basique et disperser ou dissoudre la résine époxyde modifiée (A) dans l'eau, la résine époxyde modifiée (A) étant obtenue en copolymérisant une résine époxyde modifiée contenant un groupe insaturé polymérisable (a) et un monomère vinylique (b) comprenant au moins un monomère vinylique contenant un groupe carboxyle (b-1), la résine époxyde modifiée contenant un groupe insaturé polymérisable (a) étant obtenue par une réaction entre (a-1) une résine époxyde comprenant au moins une résine époxyde aromatique (a-11), (a-2) un monomère vinylique contenant un groupe glycidyle, et (a-3) une amine, et facultativement (a-4) un composant capable de réagir avec les composants (a-1) à (a-3) ; et
mélanger un agent de réticulation miscible à l'eau (B) avec la résine époxyde modifiée (A).

13. Agent d'enrobage aqueux, comprenant la composition aqueuse contenant une résine époxyde modifiée par un vinyle selon l'une quelconque des revendications 1 à 11.
